# EUROPÄISCHE PATENTSCHRIFT

(11) **EP 3 476 205 B1**
(45) Veröffentlichungstag und Bekanntmachung des Hinweises auf die Patenterteilung: **02.12.2020**
(21) Anmeldenummer: 18000837.7
(22) Anmeldetag: 26.10.2018
(51) Int. Cl.: A01G 3/025, B26B 17/02

(54) **HANDSCHERE, INSBESONDERE AST-, HECKEN- UND/ODER GARTENSCHERE**
HAND-SHEARS, IN PARTICULAR PRUNING, HEDGE AND/OR GARDEN SHEARS
CISAILLES À MAIN, EN PARTICULIER UN SÉCATEUR, CISAILLES À HAIES ET/OU DE JARDINAGE

(30) Priorität: 26.10.2017 DE 102017009982
(43) Veröffentlichungstag der Anmeldung: 01.05.2019
(73) Patentinhaber: MTD Products Inc., Valley City, OH 44280 (US)
(72) Erfinder: Held, Peter, 57584 Scheuerfeld (DE)
(74) Vertreter: Meissner Bolte Partnerschaft mbB

(56) Entgegenhaltungen:
- EP-B1- 0 421 108
- CN-U- 202 524 796
- DE-T5-112014 006 266

## Beschreibung

Aus der EP 0421108 B1 ist eine Handschere, insbesondere Ast-, Hecken- und/oder Gartenschere bekannt, die zwei durch Handhebel um ein gemeinsames Gelenk verschwenkbare Schneidelemente aufweist, wobei die Handhebel durch ein zweites zum Schneidelementen-Gelenk parallel versetztes Gelenk unabhängig von den Schneidelementen miteinander in unmittelbarer Verbindung stehen. Eines der Schneidelemente ist hierbei starr mit einem ersten der beiden Handhebel verbunden, während das andere Schneidelement einen über das Schneidelementen-Gelenk auskragenden Antriebsarm aufweist, an dem eine Koppel mit einem Ende angelenkt ist, die wiederum über ihr anderes Ende ebenfalls gelenkig an dem zweiten Handhebel befestigt ist. Auf diese Weise bilden die beiden Handhebel und die beiden Schneidelemente miteinander ein Viergelenk-System, bei dem zumindest die Anlenkachse am zweiten Handhebel relativ zu den beide Handhebel unmittelbar miteinander verbindenden Gelenk in ihrem Abstand veränderbar ist. Die Anlenkachse der Koppel am zweiten Hebel ist quer zu ihrer Achsrichtung und feststellbar geführt, wobei die Anlenkachse der Koppel in eine Schlitzführung am zweiten Handhebel eingreift sowie längs dieser mittels eines Schiebers verstellbar abgestützt ist.

Die Verstellung des Übersetzungsverhältnisses erfolgt dabei mittels einer Verschiebung der Anlenkachse der Koppel in der Schlitzführung.

Bei einer weiteren bekannten Ausführungsform ist die Anlenkachse der Koppel in das kleinste Übersetzungverhältnis vorgespannt, wobei sich beim Auseinanderbewegen der Handhebel eine Verschiebung der Anlenkachse der Koppel in der Schlitzführung derart ergibt, dass ein größtes Übersetzungsverhältnis erreicht wird. Diese Verstellung des Übersetzungsverhältnisses ist jedoch relativ unzuverlässig, da nach einem Schnitt mit dem größten Übersetzungverhältnis eine Rückkehr des Mechanismus auf das kleinste Übersetzungsverhältnis nicht absolut sichergestellt ist, und sofern aufeinander folgende Schnitte mit einem größten Übersetzungsverhältnis erwünscht ist, die Handhebel vor jedem Schnitt bis zur größtmöglichen Öffnungsstellung bewegt werden müssen.

Der Erfindung liegt die Aufgabe zugrunde, eine Hand-Schere, insbesondere Ast-, Hecken- und/oder Gartenschere der eingangs genannten Art zu schaffen, die bei einfachem Aufbau eine zuverlässige Betriebsweise und eine verbesserte Handhabung ergibt.

Diese Aufgabe wird durch die im Anspruch 1 angegebenen Merkmale gelöst.

Die erfindungsgemäße Schere weist zwei durch zwei Handhebel um ein erstes stationäres Gelenk verschwenkbare Schneidelemente auf, die einen Messerkopf bilden, wobei das erste Schneidelement an einem Ende des ersten Handhebels angeordnet ist, während das zweite Schneidelement einen über das erste stationäre Gelenk hinaus vorspringenden Antriebshebel aufweist. Ein Ende des zweiten Handhebels ist durch ein zweites, zum ersten Gelenk parallel versetztes, stationäres Gelenk mit dem ersten Handhebel verbunden, und eine langgestreckte Koppel weist an ihren Enden dritte und vierte Gelenke auf, von denen das dritte Gelenk am freien Ende des Antriebshebels in axialem Abstand von dem ersten Gelenk angelenkt ist und mit diesem ein erstes Gelenkpaar bildet. Das vierte Gelenk ist in axialem Abstand von dem zweiten Gelenk an dem zweiten Handhebel angelenkt und bildet mit diesem ein zweites Gelenkpaar. Die beiden Handhebel und die beiden Schneidelemente bilden ein durch Gelenkbolzen der Gelenkpaare gebildetes Viergelenk-System, wobei der Abstand der Gelenke zumindest eines der Gelenkpaare dadurch änderbar ist, dass das an dem Antriebshebel und/oder dem ersten Handhebel angeordnete Gelenk in einer Schlitzführung in diesem Hebel axial verschiebbar zwischen einer ersten Position für einen Normalschnitt und einer einem Kraftschnitt entsprechenden zweiten Position für einen Kraftschnitt mit vergrößerter Untersetzung verschiebbar geführt sind.

Erfindungsgemäß ist eine elastisch lösbare Kraftschnitt-Rasteinrichtung für das und/oder die verschiebbaren Gelenke vorgesehen, die nach dem vollständigen Auseinanderbewegen der Handhebel das verschiebbare Gelenk in der zweiten, dem Kraftschnitt entsprechenden Position hält und lediglich durch ein vollständiges Zusammenbewegen der Handhebel lösbar ist, um eine Zurückbewegung des verschiebbaren Gelenks in die dem Normalschnitt entsprechende Position zu ermöglichen, wobei ein erstes Federelement zur Rückführung der verschiebbaren Gelenks in die dem Normalschnitt entsprechende Position vorgesehen ist.

Gemäß einer vorteilhaften Ausgestaltung der Erfindung ist weiterhin eine Normalschnitt-Rasteinrichtung vorgesehen, die das verschiebbare Gelenk in der Position für einen Normalschnitt hält und durch eine Bewegung der beiden Handhebel voneinander fort nach Überwindung einer von dem Benutzer deutlich merkbaren Rastkraft lösbar ist,

Weitere vorteilhafte Ausgestaltungen und Weiterbildungen der Erfindung ergeben sich aus den Unteranprüchen.

Durch die erfindungsgemäße Ausgestaltung der Schere ergibt sich eine sichere Rastung der Schere in der dem Kraftschnitt entsprechenden Position des verschiebbaren Gelenks unabhängig davon, wie die Schere gehalten wird, und das erste Federelement erfordert nur eine vergleichsweise geringe Federkraft, um nach dem Zusammenbewegen der Handhebel das verschiebbare Gelenk in die Position für den Normalschnitt zurück zu bewegen, da hierbei die Kraftschnitt-Rasteinrichtung gelöst wird.

Wenn ein Kraftschnitt erwünscht ist, ermöglicht die Kraftschnitt-Rasteinrichtung ein Arretieren des beweglichen Koppelgelenks in der für den Kraftschnitt erforderlichen maximalen Öffnungsposition der Handhebel unter Aufhebung der Wirkung der Rückstellfeder, bis ein nachfolgendes vollständiges Schließen der Schere erfolgt.

Diese Arretierung in der Kraftschnitt-Stellung wird damit entweder automatisch bei einem vollständigen Zusammenbewegen der Handhebel und damit der Rückkehr der Schere in den geschlossenen Zustand aufgehoben, oder es ist ein Verstellmechanismus vorgesehen, der wahlweise diese Rückkehr in die Raststellung für den Normalschnitt ermöglicht oder nicht.

Dies bedeutet, dass die Arretierung in der Kraftschnittstellung entweder beim Schließen der Messer der Schere aufgehoben werden kann, oder nach Wunsch für mehrere aufeinander folgende Schnitte beibehalten werden kann.

Durch die erfindungsgemäße Ausgestaltung der Rasteinrichtungen kann weiterhin die Rückstellkraft der Rückstellfeder wesentlich verringert werden, so dass diese einer Öffnungsbewegung der Schere keinen zu großen Widerstand entgegensetzt.

Weiterhin ergibt sich eine hohe Betriebssicherheit hinsichtlich der Umstellung vom Normalschnitt auf den Kraftschnitt.

Durch eine zweite, eine Normalschnitt-Rasteinrichtung bildende elastische Rasteinrichtung ist es möglich, einen für den Benutzer deutlich wahrnehmbaren Anschlag bei Erreichen der maximalen Öffnungsweite der Handhebel für den Normalschnitt auszubilden, den er durch entsprechende Kraftausübung überwinden kann. Die Kraft zur Überwindung dieses Anschlags kann über die Kurvenform der Kulisse oder Schlitzführung und/oder die Ausgestaltung der Normalschnitt-Rasteinrichtung und/oder die Rückstellfeder dosiert werden.

Die beiden Rasteinrichtungen können entweder durch voneinander getrennte Rasteinrichtungen gebildet sein, oder es kann ein gemeinsames Rastelement vorgesehen sein, das beide Rastwirkungen vereinigt.

Damit ergibt sich eine verbesserte Handhabung der Schere bei einfachem Aufbau und mit hoher Betriebssicherheit,

Die Erfindung wird nachfolgend anhand von in der Zeichnung dargestellten Ausführungsbeispielen noch näher erläutert.

In der Zeichnung zeigen:
- Figur 1: eine Vorderansicht einer ersten Ausführungsform der Handschere;
- Figur 2: eine Rückansicht der Handschere nach Figur 1;
- Figur 3: eine vergrößerte Vorderansicht des Messerkopfes der Handschere nach den Figuren 1 und 2;
- Figur 4: eine vergrößerte Rückansicht des Messerkopffes der Handschere nach den Figuren 1 bis 3;
- Figur 5: eine Teilansicht des Kulissenhebels, der den Bewegungsablauf des eine Koppel mit dem Kulissenhebel verbindenden Gelenks zeigt;
- Figur 6: eine perspektivische Ansicht des Messerkopfes in der Stellung mit kleinsten Übersetzungsverhältnis;
- Figur 7: eine der Figur 6 entsprechende Vorderansicht des Messerkopfes;
- Figur 8: eine der Figur 6 entsprechende Rückansicht des Messerkopfes ;
- Figur 9: eine perspektivische Ansicht des Messerkopfes in der Stellung mit größtem Übersetzungsverhältnis
- Figur 10: eine der Figur 9 entsprechende Vorderansicht des Messerkopfes;
- Figur 11: eine der Figur 9 entsprechende Rückansicht des Messerkopfes;
- Figur 12: eine Darstellung des Messerkopfes bei einer Bewegung des Messers und der Gegenschneide aus der Kraftschnitt-Position in die geschlossene Stellung;
- Figur 13: eine Rückansicht einer zweiten Ausführungsform des Messerkopfes mit einer Möglichkeit zur Vor-Festlegung des Übersetzungsverhältnisses;
- Figur 14: eine perspektivische Ansicht der zweiten Ausführungsform bei einer Einstellung des Stellhebels auf eine erste Stellung ;
- Figur 15: eine Rückansicht der zweiten Ausführungsform des Messerkopfes bei einer Einstellung des Stellhebels auf eine zweite Stellung;
- Figur 16: eine perspektivische Ansicht der zweiten Ausführungsform des Messerkopfes bei einer Einstellung des Stellhebels auf eine zweite Stellung;
- Figur 17: eine Vorderansicht einer dritten Ausführungsform des Messerkopfes;

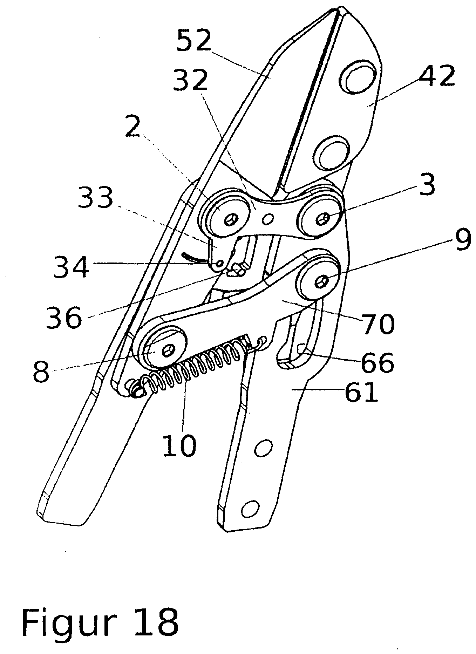

- Figur 18: eine der Figur 17 entsprechende perspektivische Ansicht des Messerkopfes;

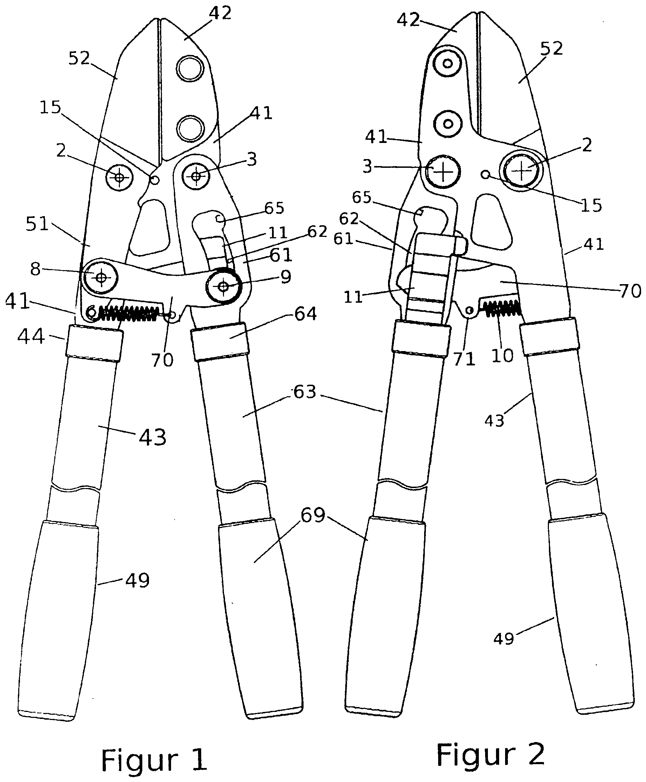

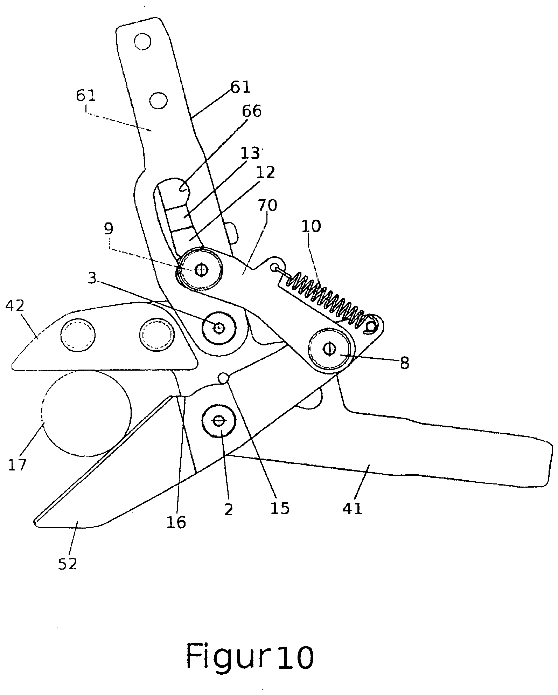

In den Zeichnungen ist in den Figuren 1 bis 12 eine erste Ausführungsform der Schere gezeigt, die eine Ambossschere mit einem Messerkopf darstellt, bei dem ein erstes Schneidelement in Form einer Gegenschneide 42 mit dem freien Ende eines ersten Handhebels in Form eines gekröpften Gegenschneidenhebels 41 verschraubt ist. Mit der Gegenschneide 42 wirkt ein am freien Ende eines einen Antriebshebel bildenden Messerhebels 51 ausgebildetes zweites Schneidelement in Form einer Messerschneide 52 zusammen. Die nachfolgend beschriebene Lösung ist jedoch auch für sogenannte Bypassscheren geeignet, bei denen Messerschneide und Gegenschneide aneinander vorbei gleiten.

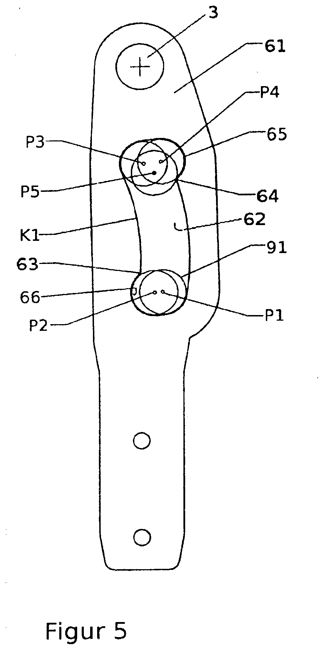

Der Gegenschneidenhebel 41 bildet die Grundlage für ein ebenes Viergelenkgetriebe und trägt ein erstes Gelenk 2, über das der den Antriebshebel bildende Messerhebel 51 mit dem Gegenschneidenhebel 41 gelenkig verbunden ist, und ein zweites Gelenk 3, über das ein von einem Kulissenhebel gebildeter zweiter Handhebel 61 gelenkig mit dem Gegenschneidenhebel 41 verbunden ist. Der Kulissenhebel 61 weist eine Schlitzführung in Form einer Kulisse 62 auf, die sich entlang des Kulissenhebels in dessen Längsrichtung mit einer leichten Krümmung erstreckt und an ihren Enden Lagerschalen-förmige Erweiterungen aufweist, die Rastmulden 65, 66 bilden, wie dies insbesondere aus Figur 5 zu erkennen ist. Die Kulisse 62 ist auf der der Messerschneide 52 entgegengesetzten Seite des zweiten Gelenks 3 in dem Kulissenhebel 61 ausgebildet.

In den Figuren 1 und 2 ist die Schere mit Griffrohren dargestellt. Die Griffrohre umfassen gemäß den Figuren 1 und 2 ein erstes Hebelrohr 43, das über eine Abschlussmanschette 44 mit dem freien Ende des Gegenschneidenhebels 41 verbunden ist und einen Handgriff 49 trägt. Ein zweites Hebelrohr 63 ist mit dem Kulissenhebel 61 über eine Abschlussmanschette 64 mit dem freien Ende des Kulissenhebels 61 verbunden und trägt einen Handgriff 69.

In den nachfolgenden Figuren ist der Messerkopf ohne diese Hebelrohre, Abschlussmanschetten und Handgriffe dargestellt.

Der Messerhebel 51 ist mit dem Kulissenhebel 61 über eine Koppel 70 verbunden, wobei ein erstes Ende der Koppel 70 über ein drittes Gelenk 8 gelenkig mit dem Messerhebel 51 an der der Messerschneide 52 entgegengesetzten Seite des ersten Gelenks 2 und in Abstand von diesem verbunden ist. Das zweite Ende der Koppel 70 ist über ein viertes Gelenk 9 gelenkig und in der Kulisse 62 des Kulissenhebels 61 verschiebbar mit diesem verbunden.

Das auf diese Weise gebildete ebene Viergelenkgetriebe mit den Gelenken 2, 3 und 8, 9 weist ein Untersetzungsverhältnis auf, das von dem Abstand zwischen dem zweiten Gelenk 3 und dem vierten Gelenk 9 und damit von der Position dieses vierten Gelenks in der Kulisse 62 abhängt, das in dieser Kulisse verschiebbar ist.

Die Bedienbewegung der Schere erfolgt über den Gegenschneidenhebel 41 und den Kulissenhebel 61, deren freie Enden jeweils mit den Hebelrohren 43, 63 verpresst sind. Die Bewegung des Kulissenhebels 61 wird über die Koppel 70 auf den Messerhebel 51 übertragen. Die Koppel 70 ist in dem Gelenk 9 mit dem Kulissenhebel 61 verbunden. Das durch einen Gelenkbolzen mit einem Kopf 91 gebildete Gelenk 9 ist in der Kulisse 62 drehbar und verschiebbar und kann während des Betriebs der Schere verschiedene Kulissenpositionen einnehmen.

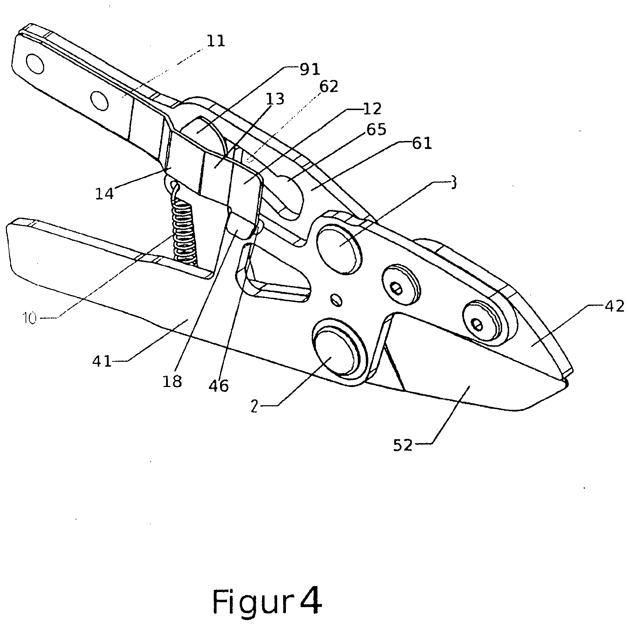

Wie dies aus den Figuren 1 und 4 zu erkennen ist, ist eine Blattfeder 11 auf der von den Schneidelementen 42, 52 abgewandten Seite der Schlitzführung des Kulissenhebels 61 gegenüber diesem starr befestigt und weist sich teilweise über die Schlitzführung 62 erstreckende abgebogene Abschnitte 12, 13, 14 auf. Diese abgebogenen Abschnitte bilden eine zur Aufnahme eines Kopfes 91 des Gelenkbolzens des Gelenks 9 ausgebildete Ausbiegung 14 und eine schräge Gleitfläche 13, die zusammen eine Normalschnitt-Rasteinrichtung für den Gelenkbolzen in einer ersten Position für den Normalschnitt bilden. Die Blattfeder 11 übt mit ihrer Gleitfläche 13 auf den Kopf 91 des Gelenkbolzens des Gelenks 9 eine fühlbare elastische Haltekraft gegen eine Verschiebung dieses Gelenkbolzens aus seiner in Figur 4 dargestellten ersten Position an dem von dem Gelenk 3 entfernten Ende der Schlitzführung 62 bei geschlossenem Messerkopf der Schere heraus aus.

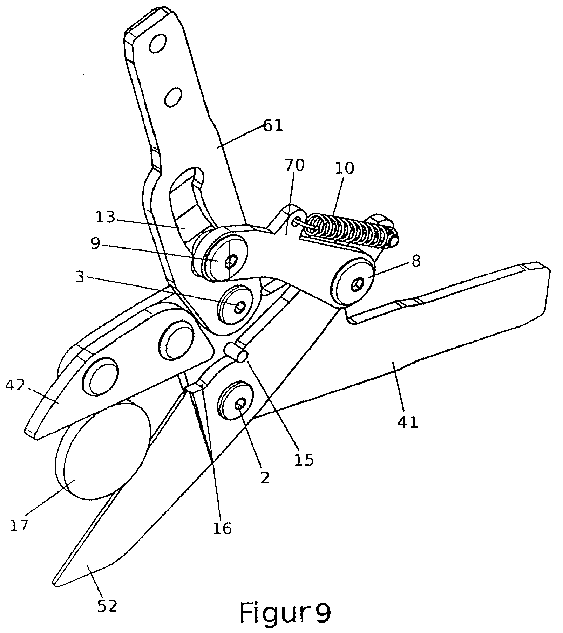

Ein am freien Ende der Blattfeder 11 liegender Abschnitt 12 ist gegen den Kulissenhebel 61 vorgespannt. Die freie Endkante dieses Abschnitts 12 der Blattfeder 11 bildet eine Kraftschnitt-Rasteinrichtung und verhindert im am Kulissenhebel anliegenden Zustand eine Zurückbewegung des Kopfes 91 des Gelenkbolzens des Gelenks 9 auf die erste Position, wenn sich dieser in der dem Gelenk 3 benachbarten Position (Figur 9) befindet, die einer Kraftschnitt-Position entspricht.

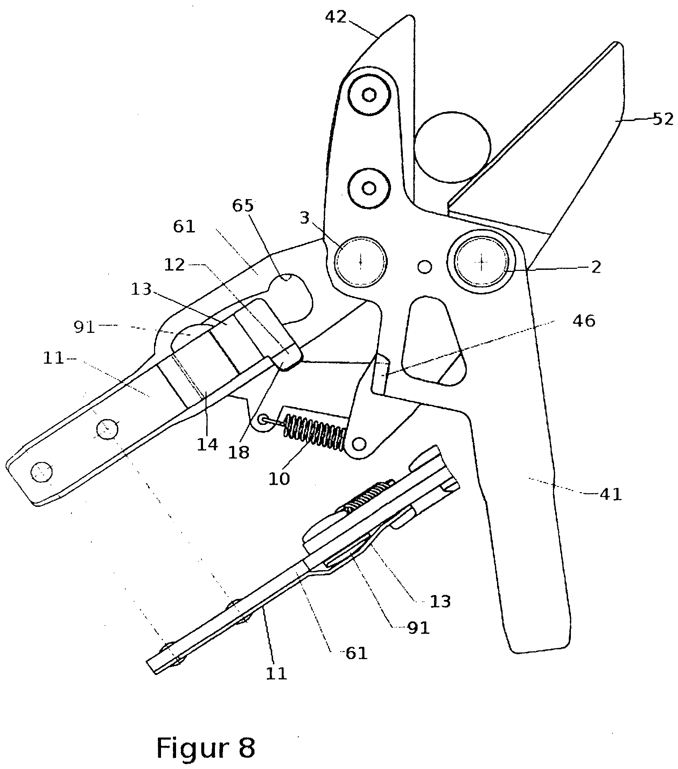

Der am freien Ende der Blattfeder liegende Abschnitt 12 der Blattfeder 11 weist eine auf den Gegenschneidenhebel 41 gerichtete Federlasche 18 auf, die beim Schließen der Schere mit einer insbesondere in Figur 8 gezeigten Aushebeschräge 46 auf der Innenkante des Gegenschneidenhebels 41 zusammenwirkt, um den Abschnitt 12 von dem Kulissenhebel 61 abzuheben und damit eine Zurückbewegung des Kopfes 91 des Gelenkbolzens des Gelenks 9 in die von dem Gelenk 3 entfernte Position unter der Wirkung der Feder 10 zu ermöglichen, die zwischen dem Messerhebel 51 und der Koppel 70 angreift.

Damit ist ein einziges Federelement zur Ausbildung beider Rasteinrichtungen ausreichend.

In Figur 5 sind die einzelnen Positionen des das vierte Gelenk 9 bildenden Gelenkbolzens in der Kulisse 62 des Kulissenhebels 61 ausführlich gezeigt.

In der Normalstellung bei geschlossener Schere wird das vierte Gelenk 9 und damit die Koppel 70 von der Zugfeder 10, die an einem Ansatz 71 der Koppel 70 angreift, in der unteren, von dem zweiten Gelenk 3 am weitesten entfernten Anschlagposition gehalten. Der Kopf 91 des Gelenks 9 befindet sich bei geschlossener Schere im Wesentlichen unterhalb der Ausbiegung 14 der Blattfeder 11 und in der Kulissenposition P1 gemäß Figur 5, in der die jeweiligen Positionen der Mittelachse des das Gelenk 9 bildenden Gelenkbolzens mit P1 bis P5 bezeichnet sind.

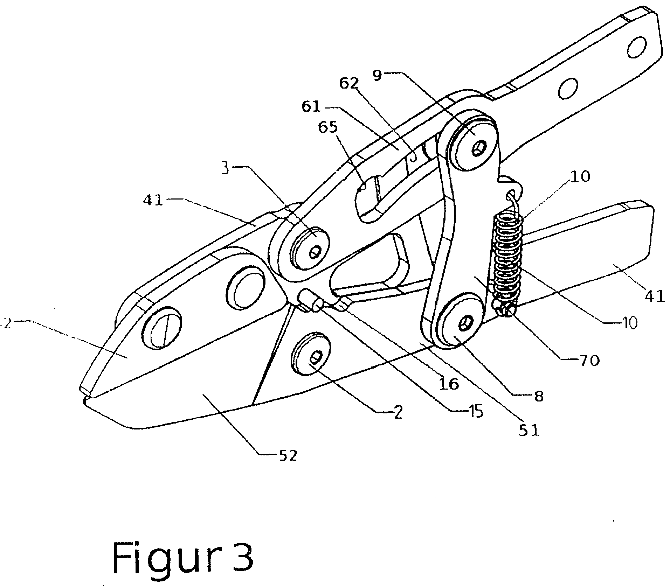

Wird die Schere aus dieser Position P1 heraus geöffnet, so ergibt sich zunächst in Bezug auf die Messerbewegung ein kleiner Leerweg, in dem der Gelenkbolzen des Gelenks 9 von der Position P1 in die Position P2 gelangt. Erst dann beginnt die Öffnungsbewegung des Messerhebels 51. Begrenzt wird dessen Öffnungswinkel durch einen insbesondere in Figur 3 erkennbaren Anschlagbolzen 15, der sich von der Oberseite des Gegenschneidenhebels erstreckt und in Vertiefungen 16 in der Innenkante des Messerhebels 51 einfallen kann, wie dies in Figur 3 gezeigt ist.

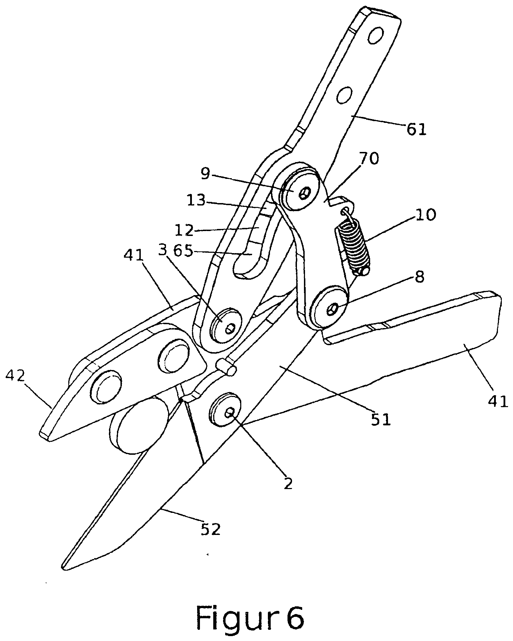

In den Figuren 6 bis 10 ist diese Bewegung auf die maximale Hebelöffnung für den Normalsschnitt dargestellt. Die weitere Öffnungsbewegung des Kulissenhebels 61 wird zunächst durch die Rampe 63 der Kulisse begrenzt. Diese Rampe 63 ist nur mit einem für den Bediener deutlich wahrnehmbaren kurzen zusätzlichen Kraftaufwand überwindbar. Die Stärke dieser Kraft wird bestimmt von der Kurvenform der ersten Rampe 63, der Stärke der Zugfeder 10 und der Haltekraft, die die Blattfeder 11 mit ihrer Gleitfläche 13 auf den Kopf 91 des Gelenkbolzens des vierten Gelenks 9 ausübt. Erst nach Überwindung der Gleitfläche 13 durch den Kopf 91 des Gelenkbolzens des Gelenks 9 kann der Kulissenhebel 61 soweit geöffnet werden, dass die Koppel 70 in die Kraftposition mit maximaler Untersetzung gelangt. Dies ist jedoch nur für den Schnitt dicker oder harter Äste erforderlich. Für mittelstarkes Schnittgut 17 ist die in den Figuren 6 bis 8 gezeigte Getriebekonstellation ausreichend.

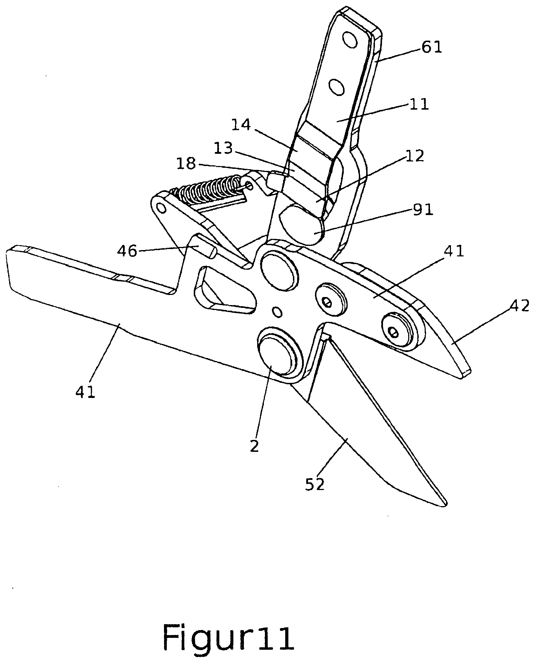

Insbesondere in den Figuren 4 und 11 ist zu sehen, dass am Ende einer Bewegung des Messers 52 jn Richtung auf die Gegenschneide 42 die Aushebeschräge 46 an der Innenkante des Gegenschneidenhebels 41 den Endabschnitt 12 der Blattfeder 11 gegen deren Vorspannung über deren abgewinkelte Federlasche 18 von dem Kulissenhebel 61 abhebt. Zwischen dem freien Endabschnitt 12 der Blattfeder 11 und dem Kulissenhebel 61 entsteht somit ein Abstand. Während des Öffnungsvorgangs der Schere bewegt sich die Aushebeschräge 46 von der abgewinkelten Federlasche 18 fort. Die Vorspannung der Blattfeder 11 ist so gewählt, dass der freie Endabschnitt 12 der Blattfeder in der dargestellten Position mit Druck auf dem Kulissenhebel 61 aufliegt.

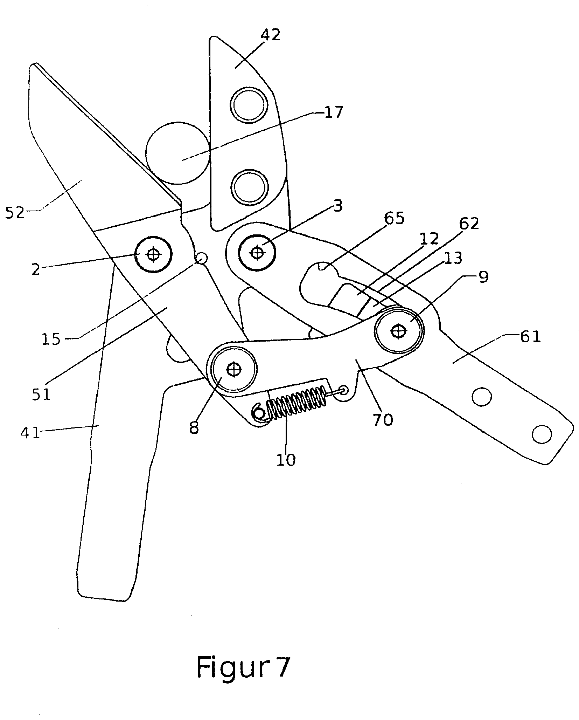

Wenn der Kulissenhebel 61 aus der geöffneten Scherenstellung für den Normalschnitt heraus mit deutlich fühlbarer stärkerer Kraftausübung weiter geöffnet wird, bewegt sich der Gelenkbolzen des Gelenks 9 ausgehend von der den Figuren 6 und 7 entsprechenden Kulissenposition P2 in die Position P3 in Figur 5 . Diese Bewegung erfolgt gegen das Rückstellmoment der Koppel 70, das auf diese von der Feder 10 ausgeübt wird. Beim Passieren der Gleitfläche 13 wird die Blattfeder 11 entgegen deren Vorspannung gegen den Kulissenhebel 61 vom Kopf 91 des das Gelenk 9 bildenden Gelenkbolzens angehoben. Erreicht dieser Gelenkbolzen die Position P3, so rastet die freie Kante des Endabschnittes 12 der Blattfeder 11 hinter dem Kopf 91 des Gelenkbolzens wieder ein und verhindert, dass sich der Gelenkbolzen in der Kulisse 62 wieder zurück bewegen kann (Figuren 9 bis 11).

Die Zugfeder 10 erreicht in dieser Getriebekonstellation ihre größte Vorspannung und ruft an der Koppel 70 ein entsprechendes Rückstellmoment hervor, dem jedoch zunächst die Kraftschnitt-Rasteinrichtung in Form der freien Kante des Endabschnittes 12 der Blattfeder 11 entgegenwirkt.

Beim Schließen der Schere gleitet der Kopf 91 aus dieser Position der größten Untersetzung an der freien Kante des Endabschnittes 12 der Blattfeder 11 entlang in die Gelenkposition P4 (Figur 5). Die lagerschalenähnliche Ausbildung oder Rastmulde 66 der Enden der Kulisse 62 mit der Stützkante 64 dient dazu, dass die Reaktionskräfte zu Beginn des Schneidvorgangs bedingt durch die Ausrichtung des Kulissenhebels 70 nicht durch die Blattfeder 11 aufgenommen werden müssen.

Wenn sich die Schere nach einem erfolgten Kraftschnitt wieder schließt, gelangt gegen Ende der Schließbewegung die Aushebeschräge 46 des Gegenschneidenhebels 41 unter die Federlasche 18 und hebt die Blattfeder 11 wieder an, so dass die Wirkung beider Rasteinrichtungen aufgehoben wird.

Wird die Schere ausgehend von dieser Stellung für einen neuen Schnitt wieder geöffnet, bewegt sich der Gelenkbolzen des Gelenks 9 aus der Stützschale heraus und an der Stützkante 64 entlang in die in Figur 5 dargestellte Position P5. Der Kopf 91 hat sich in dieser Position bereits etwas unter den Endabschnitt 12 der Blattfeder 11 geschoben, so dass die Blattfeder 11 die weitere Bewegung des Gelenkbolzens nicht mehr blockieren kann, auch nachdem sich die Aushebeschräge 46 im weiteren Verlauf des Öffnungsvorgangs wieder von der Federlasche 18 wegbewegt hat. Sobald der Mittelpunkt des Gelenkbolzens des Gelenks 9 die Bahnmitte des Kulissenbogens in etwa erreicht hat, lässt die Vorspannung der Feder 10 die Koppel 70 wieder in ihre Ausgangslage P1 zurückschnellen, in der die Schere für den Normalschnitt eingestellt ist.

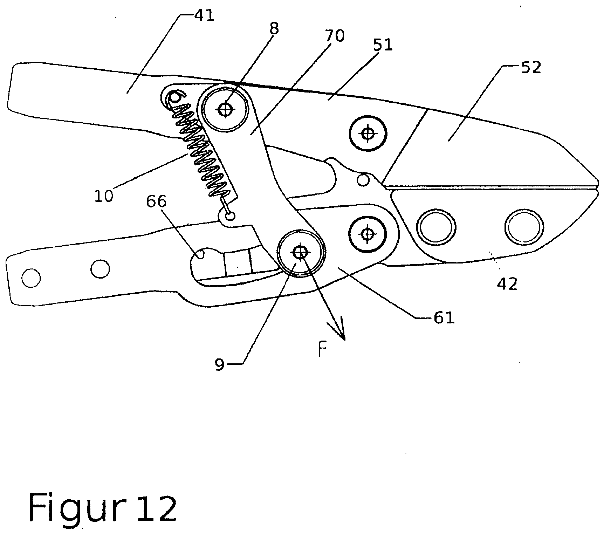

Die sichere Funktion der oben beschriebenen Bewegung des Gelenkbolzens von P4 über P5 nach P1 ist an die Bedingung geknüpft, dass zwischen dem Messerhebel 51 und dem Gegenschneidenhebel 61 eine Reibkraft besteht, die bei der in Figur 12 dargestellten horizontalen Arbeitsposition der Astschere verhindert, dass das Gelenk 9 beim Öffnen der Schere als Folge der Kraft F (Figur 12), resultierend aus dem Gewicht der Koppel 70 und der Schwerpunktlage des Messerhebels 51, in der Lagerschale 65 verbleibt. Erfahrungsgemäß lockern sich die Gelenke der Schere im Laufe einer langen Betriebszeit durch unvermeidlichen Verschleiß. Damit stets eine ausreichende Reibkraft zwischen Messerhebel 51 und Gegenschneidenhebel 61 gewährleistet ist, ist vorzugsweise vorgesehen, das Gelenk 2 mit einer Tellerfeder zu versehen, die das Gelenk 2 dauerhaft axial verspannt.

Zusammenfassend ist die Funktion der soweit beschriebenen Ausführungsform wie folgt:
Der Bediener entscheidet mit der gewählten Öffnungsweite der Griffrohre 49, 69 über das gewünschte Kraftpotential. Der sich durch die Kante 63 der Kulisse 62 nach Figur 5 und die Gleitfläche 13 ergebende fühlbare Anschlag signalisiert dem Bediener die maximale Öffnungsweite der Griffrohre für den Normalschnitt. Für den Schnitt eines dicken Astes öffnet der Bediener die Griffrohre über den Anschlag hinaus bis zur maximalen Öffnungsweite der Griffrohre. Damit steht das größte Übersetzungsverhältnis der Schere zur Verfügung, ohne dass der Benutzer eine gesonderte Umschaltbewegung eines Getriebes ausführen muss, oder gar die Schere zur Verlängerung von Teleskopgriffrohren aus der Hand nehmen muss. Der Umschaltvorgang ist selbst dann möglich, wenn der Schneidvorgang in der Normaleinstellung begonnen wurde, der Bediener aber dann bemerkt, dass der zu schneidende Ast zu dick oder zu widerstandsfähig für diese Getriebeeinstellung ist. Selbst wenn die Scherenschneide sich schon nicht mehr aus dem Anschnitt herausziehen lässt, kann die Schere auch in dieser Situation ganz einfach bis zur maximalen Kraftschnitteinstellung geöffnet und der Schneidvorgang als Kraftschnitt beendet werden. Bei der Öffnung der Schere für den nächsten Schnitt stellt sich das Getriebe wieder automatisch auf Normalschnitt um.

Voraussetzung für eine Kraftschnitt ist bei der oben beschriebenen Schere, dass diese bis zur maximalen Öffnungsweite geöffnet wird. Nur dann rastet der Endabschnitt 12 der Blattfeder 11 hinter dem Gelenkkopf 91 ein und hält den Gelenkbolzen in der Gelenkposition P4. Dies ist im Grunde kein Problem, denn für den Schnitt eines dicken Astes sollte der Handhub der Schere möglichst voll genutzt werden.

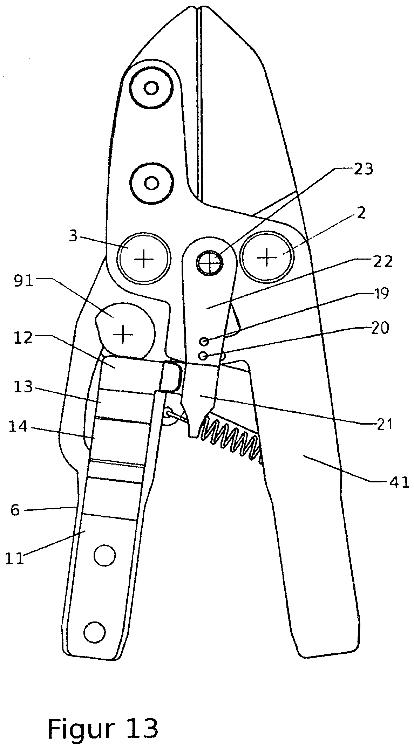

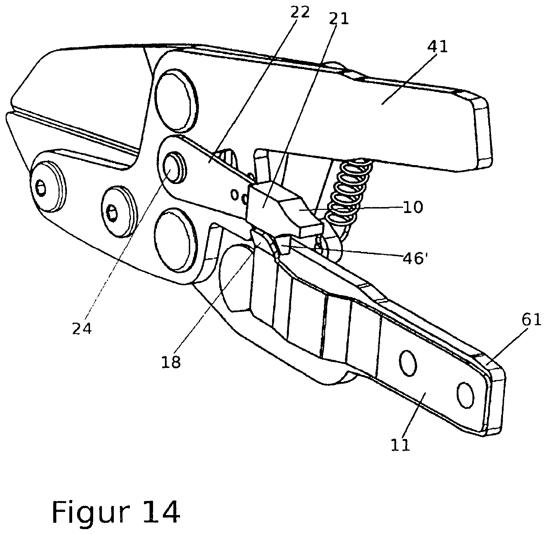

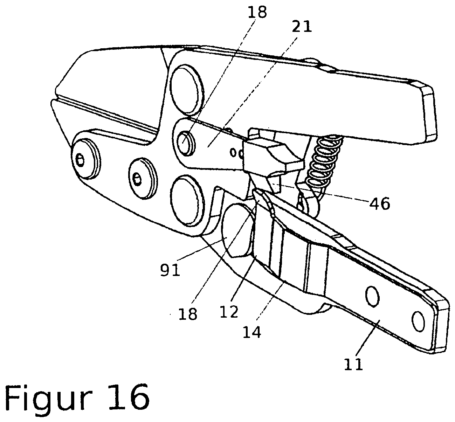

Für den Fall, dass der Anwender die Schere für mehrere Schnitte in der Kraftstellung bei nicht voll ausgeschöpftem Handweg nutzen will, ist es möglich, die automatische Rückstellung in den Normalschnittmodus abschaltbar zu gestalten. Dies ist in den Figuren 13 bis 16 dargestellt. In dieser Ausführungsform der Schere ist die Aushebeschräge 46', die auf die abgewinkelte Federlasche 18 wirkt, nicht in dem Gegenschneidenhebel 41 integriert. Die Aushebeschräge 46' ist ein Teil eines durch einen Betätigungsknopf 21 betätigbaren Stellhebels 22, der an dem Gegenschneidenhebel 41 in etwa zwischen den Gelenken 2, 3 gelenkig befestigt ist, Der Stellhebel 22 kann auf zwei verschiedene Arbeitspositionen bewegt werden. In Figur 13 ist die Einstellung "Automatik" dargestellt. Die Aushebeschräge 46' befindet sich in der gleichen Position und hat die gleiche Wirkgeometrie wie die zuvor beschriebene Aushebeschräge 46 an dem Gegenschneidenhebel 41. Figur 14 zeigt die Schere nach einem beendeten Kraftschnitt. Das freie Ende der Blattfeder 11 ist angehoben und hat keine Rastwirkung auf den Gelenkkopf 91. Wird die Schere für den nächsten Schnitt wieder geöffnet, so springt das Gelenk 91 automatisch in die Gelenkposition P1 zurück.

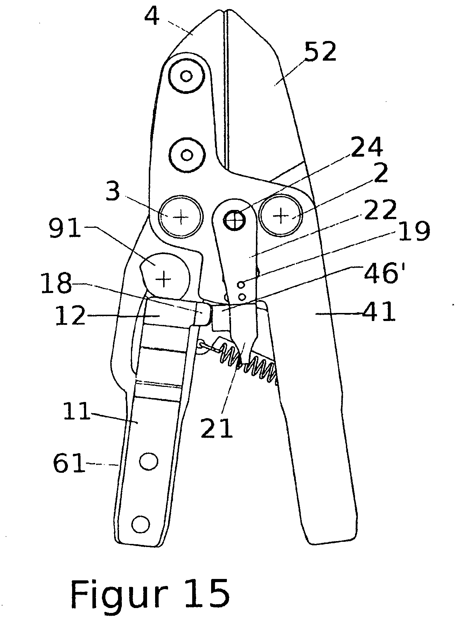

Wird der Stellhebel 22 gemäß Figur 15 in die Position "Kraftschnitt" bewegt, so bleibt die Wirkung der Aushebeschräge 46 auf die Blattfederlasche 18 aus. Der freie Endabschnitt 12 der Blattfeder 11 wird nicht angehoben und die Sperrwirkung der Blattfeder 11 auf den Gelenkkopf 91 bleibt beim erneuten Öffnen der Schere für den nächsten Schnitt erhalten. Mit der Schere können nun Kraftschnitte ausgeführt werden, ohne dass die Schere maximal geöffnet werden muss, natürlich mit entsprechend reduzierter Öffnungsweite des Scherenkopfes. Diese Arbeitsweise ermöglicht Übersetzungsverhältnisse im Bereich zwischen Normalschnitt und Kraftschnitt.

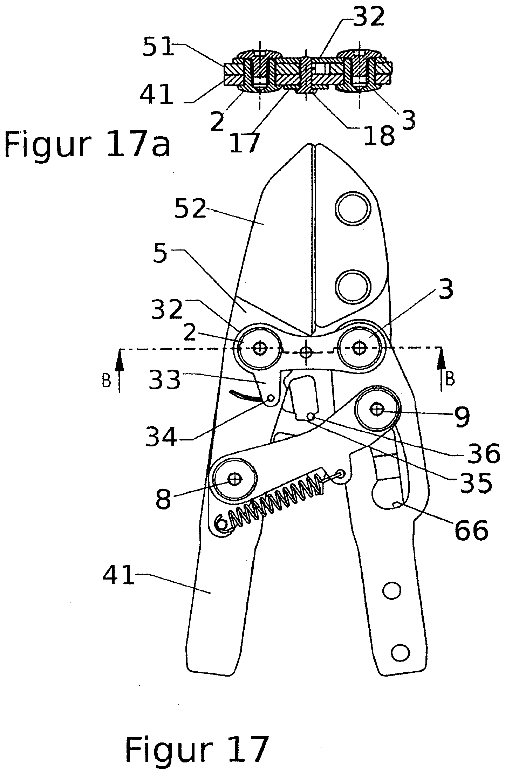

In Figur 17 ist eine Verstärkungslasche 32 mit integrierter Federlasche 33 dargestellt, mit deren Hilfe vermieden wird, dass in einer horizontalen Arbeitsposition der Schere gemäß Figur 15, der Gelenkbolzen des Gelenks 9 beim Öffnen der Schere in der Lagerschale 65 verbleibt. Die Federlasche 33 weist auf ihrer Rückseite einen Reibbuckel 34 auf, der eine zu leichte Relativbewegung des Messerhebels 51 in Bezug auf den Gegenschneidenhebel 41 verhindert und somit die gleiche Wirkung wie die oben beschriebene Tellerfeder erzielt.

Anstelle der Federlasche kann auch zumindest eine (nicht dargestellte) Tellerfeder verwendet werden, die den Gelenkbolzen des Gelenkes 2 in Axialrichtung vorspannt.

Aus Figur 17 ist ferner zu ersehen, wie der Verstellweg des Stellhebels 23 mittels einer Ausnehmung 35 im Gegenschneidenhebel 41 und eines Anschlagstiftes 36, der in den Stellhebel 23 eingepresst ist, begrenzt wird.

## Patentansprüche

1. Handschere, insbesondere Ast-, Hecken- und/oder Gartenschere, mit zwei durch zwei Handhebel (41, 43, 49; 61, 63, 69) um ein erstes stationäres Gelenk (2) verschwenkbaren Schneidelementen (42, 52), die einen Messerkopf (1) bilden, mit den folgenden Merkmalen:
das erste Schneidelement (42) ist an einem Ende eines ersten Handhebels (41, 43, 49) angeordnet, während das zweite Schneidelement (52) einen über das erste stationäre Gelenk (2) hinaus vorspringenden Antriebshebel (51) aufweist,
ein Ende eines zweiten Handhebels (61, 63, 69) ist durch ein zweites, zum ersten Gelenk (2) parallel versetztes, stationäres Gelenk (3) mit dem ersten Handhebel (41, 43, 49) verbunden,
eine langgestreckte Koppel (70) weist an ihren Enden dritte und vierte Gelenke (8, 9) auf, von denen das dritte Gelenk (8) am freien Ende des Antriebshebels (51) in axialem Abstand von dem ersten Gelenk (2) angelenkt ist und mit diesem ein erstes Gelenkpaar (2, 8) bildet und das vierte Gelenk (9) in axialem Abstand von dem zweiten Gelenk (3) an dem zweiten Handhebel (61, 63, 69) angelenkt ist und mit diesem ein zweites Gelenkpaar (3, 9) bildet,
die beiden Handhebel (41, 43, 49; 61, 63, 69) und die beiden Schneidelemente (42, 52) bilden ein durch Gelenkbolzen der Gelenkpaare (2, 8; 3, 9) gebildetes Viergelenk-System, wobei der Abstand der Gelenke zumindest eines der Gelenkpaare (2, 8; 3, 9) dadurch änderbar ist, dass das an dem zweiten Handhebel (61, 63, 69) angeordnete vierte Gelenk (9) in einer eine Kulisse in Form einer Schlitzführung (62) in diesem Hebel axial verschiebbar zwischen einer ersten Position für einen Normalschnitt und einer zweiten Position für einen Kraftschnitt mit vergrößerter Untersetzung und durch ein erstes Federelement (10) in die dem Normalschnitt entsprechende Position rückführbar ist,
**dadurch gekennzeichnet, dass** eine Kraftschnitt-Rasteinrichtung (12) vorgesehen ist, die nach dem vollständigen Auseinanderbewegen der Handhebel (41, 43, 49; 61, 63, 69) das verschiebbare Gelenk (9) in einer dem Kraftschnitt entsprechenden Position (65) hält und lediglich durch ein vollständiges Zusammenbewegen der Handhebel (41, 43, 49; 61, 63, 69) lösbar ist, um eine Zurückbewegung des verschiebbaren Gelenks (9) durch das erste Federelement (10) in die dem Normalschnitt entsprechende Position zu ermöglichen.

2. Handschere nach Anspruch 1, **dadurch gekennzeichnet, dass** eine elastische Normalschnitt-Rasteinrichtung (13, 14) das verschiebbare Gelenk (9) in der Position für einen Normalschnitt hält und durch eine Bewegung der beiden Handhebel (41, 43, 49; 61, 63, 69) voneinander fort nach Überwindung der Rastkraft der Normalschnitt-Rasteinrichtung (13,14) lösbar ist.

3. Handschere nach Anspruch 2, **dadurch gekennzeichnet, dass** die Schlitzführung (62) und/oder die Schlitzführungen zumindest eine erste Rastmulde (66) für das verschiebare Gelenk (9) der Koppel (70) aufweist/aufweisen, welche in der der Außenkante des jeweiligen Hebels benachbarten Kante der Schlitzführung (62) und an deren von dem jeweiligen stationären Gelenk (2,3) des Gelenkpaares (2, 8; 3, 9) entfernten Ende angeordnet ist und in der das verschiebbare Gelenk (9) durch die erste Normalschnitt-Rasteinrichtung nach vollständigen Zusammenbewegen der Handhebel (43, 45; 63, 65) arretierbar ist,

4. Handschere nach einem der Ansprüche 1 bis 3, **dadurch gekennzeichnet, dass** die Schlitzführung (62) und/oder die Schlitzführungen zumindest eine zweite Rastmulde (65) für das verschiebbare Gelenk (9) der Koppel (70) aufweist/aufweisen, welche in der der Außenkante des jeweiligen Hebels benachbarten Kante der Schlitzführung (62) und an deren dem jeweiligen stationären Gelenk (2,3) des Gelenkpaares (2, 8; 3, 9) benachbarten Ende angeordnet ist und in der das verschiebbare Gelenk (9) durch die zweite Kraftschnitt-Rasteinrichtung (12) nach vollständigen Auseinanderbewegen der Handhebel (41, 43, 49; 61, 63, 69)) arretierbar ist,

5. Handschere nach einem oder mehreren der Ansprüche 1 - 4, **dadurch gekennzeichnet, dass** an einem der Handhebel (41, 43, 45; 61, 63, 65) Auslöseeinrichtungen (46) zum Lösen die Kraftschnitt-Rasteinrichtungen (12) bei einem vollständigen Zusammenbewegen der Handhebel (41, 43, 49; 61, 63, 69) vorgesehen sind.

6. Handschere nach einem oder mehreren der vorhergehenden Ansprüche, **dadurch gekennzeichnet, dass** das verschiebbare Gelenk (9) durch einen Gelenkbolzen mit einem Kopf (91) gebildet ist, dass der Kopf (91) mit einem zweiten Federelement (11) zusammenwirkt, das eine zur Aufnahme eines Kopfes (91) des in der Schlitzführung (62) verschiebbaren Gelenkbolzens des Gelenks (9) ausgebildete Ausbiegung (14) und eine schräge Gleitfläche (13) aufweist, die die Normalschnitt-Rasteinrichtung bilden, die bei Ausüben einer vergrößerten Kraft beim Auseinanderbewegen der Handhebel (41, 43, 49; 61, 63, 69) eine Bewegung dieses Gelenkbolzens aus der dem Normalschnitt entsprechenden Position in Richtung auf die zweite Position ermöglicht, und dass das zweite Federelement (11) einen gegen den zweiten Handhebel (61) vorgespannten Endabschnitt (12) aufweist, der die Kraftschnitt-Rasteinrichtung (12) bildet und den Kopf (91) nach Erreichen der Position für einen Kraftschnitt in dieser Position bis zu einem vollständigen Zusammenbewegen der Handhebel (41, 43, 49; 61, 63, 69) hält.

7. Schere nach Anspruch 6, **dadurch gekennzeichnet, dass** das zweite Federelement durch eine Blattfeder (11) gebildet ist, die an dem die Schlitzführung (62) aufweisenden einen Handhebel (61,63, 69) auf dessen von den Schneidelementen (42, 52) abgewandten Ende befestigt ist, die Schlitzführung (62) im Wesentlichen überdeckt und ausgehend von ihrer Befestigungsstelle die zur Aufnahme des Kopfes (91) ausgebildete Ausbiegung (14) und die schräge Gleitfläche (13), die die Normalschnitt-Rasteinrichtung bilden, sowie den Endabschnitt (12) aufweist, der die Kraftschnitt-Rasteinrichtung bildet.

8. Schere nach Anspruch 6, **dadurch gekennzeichnet, dass** das zweite Federelement (11) eine Formfeder aus Rundmaterial ist, die die zur Aufnahme einer Seitenfläche des Kopfes (91) des in der Schlitzführung (62) verschiebbaren Gelenkbolzens des Gelenks (9) ausgebildete, sich in Längsrichtung der Schlitzführung erstreckende Ausbiegung sowie eine schräge Gleitfläche (13) als Normalschnitt-Rasteinrichtung und in Verlängerung hiervon als Endabschnitt eine die Schlitzführung absperrende Abbiegung aufweist, die im eingerasteten Zustand das Gelenk (9) in der Kraftschnitt-Position hält und die Kraftschnitt-Rasteinrichtung bildet.

9. Schere nach einem oder mehreren der Ansprüche 6 bis 8, **dadurch gekennzeichnet, dass** das zweite Federelement (11) an der Rückseite des die Schlitzführung (62) aufweisenden einen Handhebels (61, 63, 69) auf dessen von den Schneidelementen (42, 52) abgewandten Ende befestigt ist.

10. Schere nach einem oder mehreren der Ansprüche 6 bis 9, **dadurch gekennzeichnet, dass** das zweite Federelement (11) eine benachbart zu dem Endabschnitt (12) angeordnete Federlasche (18) aufweist, die bei einem vollständigen Zusammenbewegen der Handhebel (41, 43, 49; 61, 63, 69) die Kraftschnitt-Rasteinrichtung löst

11. Schere nach Anspruch 10, **dadurch gekennzeichnet, dass** die Federlasche (18) mit den Auslöseeinrichtungen (46) des anderen Handhebels (41, 43. 49) zum Lösen die Kraftschnitt-Rasteinrichtungen beim vollständigen Schließen der Schere zusammenwirkt.

12. Schere nach einem der Ansprüche 7 oder 8, **dadurch gekennzeichnet, dass** Auslöseeinrichtungen (46') durch einen Stellhebel (22) gebildet sind, der an dem anderen Handhebel (41, 43, 49) gelenkig befestigt ist, eine Aushebeschräge (46') an seinem freien Ende aufweist und durch einen Betätigungsknopf (21) auf erste und zweite Stellungen einstellbar ist, wobei die Aushebeschräge (46') des Stellhebels (22) in dessen erster Stellung der Federlasche (18) gegenüberliegt und das freie Ende der Blattfeder (11) beim vollständigen Schließen der Schere von dem einen Handhebel abhebt, während in der zweiten Stellung des Einstellhebels (22) die Aushebeschräge (46') beim Schließen der Schere nicht mit der Federlasche (18) in Kontakt kommt.

13. Schere nach einem oder mehreren der vorhergehenden Ansprüche, **dadurch gekennzeichnet, dass** das erste Gelenk (2) Reibungselemente aufweist, die einer freien Bewegung des ersten Handhebels (41, 43, 49) gegenüber dem Antriebshebel (51) des zweiten Schneidelementes (52) einen Widerstand entgegensetzen.

14. Schere nach Anspruch 13, **dadurch gekennzeichnet, dass** die Reibungselemente durch mindestens eine Tellerfeder gebildet sind, die auf dem das erste Gelenk (2) bildenden Gelenkbolzen angeordnet ist und dieses zweite Gelenk axial vorspannt.

15. Schere nach Anspruch 9, **dadurch gekennzeichnet, dass** das erste und das zweite Gelenk über eine Verstärkungslasche (32) miteinander verbunden sind, dass die Verstärkungslasche eine integrierte Federlasche (33) aufweist, die auf ihrer dem ersten Handhebel (41, 43, 49) zugewandten Seite einen Reibbuckel (34) aufweist, der einer Relativbewegung des ersten Handhebels (41, 43, 49) gegenüber dem Antriebshebel (51) einen Widerstand entgegensetzt.

16. Schere nach einem der vorhergehenden Ansprüche, **dadurch gekennzeichnet, dass** die Koppel (71) einen an der von dem Messerkopf entfernten Kante nach außen vorspringenden Ansatz trägt, der über das erste Federelement (10) mit einem am freien Ende des Messerhebels (51) angeordneten Ansatz verbunden ist.

## Claims

1. Hand shears, in particular pruning, hedge and/or garden shears, having two cutting elements (42, 52) pivotable about a first stationary hinge (2) by two hand levers (41, 43, 49; 61, 63, 69), which cutting elements form a cutter head (1), comprising the following features:
the first cutting element (42) is arranged at an end of a first hand lever (41, 43, 49), whereas the second cutting element (52) has a drive lever (51) projecting beyond the first stationary hinge (2),
an end of the second hand lever (61, 63, 69) is connected to the first hand lever (41, 43, 49) by a second stationary hinge (3), which is offset in parallel to the first hinge (2),
an elongated coupler (70) has third and fourth hinges (8, 9) on its ends, the third hinge (8) of which being hinged at the free end of the drive lever (51) at an axial distance from the first hinge (2) and forming a first hinge pair (2, 8) with it, and the fourth hinge (9) being hinged at an axial distance from the second hinge (3) to the second hand lever (61, 63, 69) and forming a second hinge pair (3, 9) with it,
the two hand levers (41, 43, 49; 61, 63, 69) and the two cutting elements (42, 52) form a four-hinge system formed by hinge bolts of the hinge pairs (2, 8; 3, 9), wherein the distance of the hinges of at least one of the hinge pairs (2, 8; 3, 9) is changeable in that the fourth hinge (9) arranged on the second hand lever (61, 63, 69) is axially displaceable in a slotted link in the form of a slot guide (62) within this lever between a first position for a normal cut and a second position for a power cut at an increased reduction ratio, and is resettable into the position corresponding to the normal cut by a first spring element (10),
**characterized in that** a power cut latching device (12) is provided, which after the hand levers (41, 43, 49; 61, 63, 69) have been moved apart completely, holds the displaceable hinge (9) in a position (65) corresponding to the power cut, and is releasable by merely moving the hand levers (41, 43, 49; 61, 63, 69) completely towards one another, so as to enable a return movement of the displaceable hinge (9) by the first spring element (10) into the position corresponding to the normal cut.

2. The hand shears according to claim 1, **characterized in that** an elastic normal cut latching device (13, 14) holds the displaceable hinge (9) in the position for a normal cut and is releasable by a movement of the two hand levers (41, 43, 49; 61, 63, 69) away from one another after overcoming the latching force of the normal cut latching device (13, 14).

3. The hand shears according to claim 2, **characterized in that** the slot guide (62) and/or the slot guides has/have at least one first latching recess (66) for the displaceable hinge (9) of the coupler (70), which recess is arranged in the edge of the slot guide (62) adjacent to the outer edge of the respective lever and at its end remote from the respective stationary hinge (2, 3) of the hinge pair (2, 8; 3, 9), and in which the displaceable hinge (9) can be arrested by means of the first normal cut latching device after moving the hand levers (43, 45; 63, 65) completely towards one another.

4. The hand shears according to any one of claims 1 to 3, **characterized in that** the slot guide (62) and/or the slot guides has/have at least one second latching recess (65) for the displaceable hinge (9) of the coupler (70), which recess is arranged in the edge of the slot guide (62) adjacent to the outer edge of the respective lever and at its end adjacent to the respective stationary hinge (2, 3) of the hinge pair (2, 8; 3, 9), and in which the displaceable hinge (9) can be arrested by means of the second power cut latching device (12) after moving the hand levers (41, 43, 49; 61, 63, 69) completely apart.

5. The hand shears according to one or more of claims 1 to 4, **characterized in that** releasing devices (46) are provided on one of the hand levers (41, 43, 45; 61, 63, 65) for releasing the power cut latching devices (12) during moving the hand levers (41, 43, 49; 61, 63, 69) completely towards one another.

6. The hand shears according to one or more of the preceding claims, **characterized in that** the displaceable hinge (5) is formed by a hinge bolt having a head (91), that the head (91) interacts with a second spring element (11), which has a curvature (14) formed for receiving a head (91) of the hinge bolt of the hinge (9), which hinge bolt is displaceable within the slot guide (62), and an oblique sliding surface (13), which form the normal cut latching device, which, when an increased force is exerted during moving apart the hand levers (41, 43, 49; 61, 63, 69), enables a movement of this hinge bolt from the position corresponding to the normal cut towards the second position, and that the second spring element (11) has an end portion (12) pre-tensioned against the second hand lever (61), which end portion forms the power cut latching device (12) and, after reaching the position for a power cut, holds the head (91) in this position until the hand levers (41, 43, 49; 61, 63, 69) have been moved completely towards one another.

7. The shears according to claim 6, **characterized in that** the second spring element is formed by a leaf spring (11) attached to the one hand lever (61, 63, 69) having the slot guide (62) and at the end thereof facing away from the cutting elements (42, 52), substantially overlaps the slot guide (62) and has, starting from the attachment point thereof, the curvature (14) formed for receiving the head (91), and the oblique sliding surface (13), which form the normal cut latching device, as well as the end portion (12), which forms the power cut latching device.

8. The shears according to claim 6, **characterized in that** the second spring element (11) is a shaped spring of round material, which has the curvature formed for receiving a side surface of the head (91) of the hinge bolt of the hinge (9), which hinge bolt is displaceable within the slot guide (62), and which extends in the longitudinal direction in the slot guide, as well as an oblique sliding surface (13) as a normal cut latching device, and, in extension thereof, has a turn as an end portion blocking the slot guide, which turn, in the state latched in place, holds the hinge (9) in the power cut position and forms the power cut latching device.

9. The shears according to one or more of claims 6 to 8, **characterized in that** the second spring element (11) is attached on the rear side of the one hand lever (61, 63, 69) having the slot guide (62) at the end thereof facing away from the cutting elements (42, 52).

10. The shears according to one or more of claims 6 to 9, **characterized in that** the second spring element (11) has a spring tab (18) arranged adjacent to the end portion (12), which spring tab releases the power cut latching device during moving the hand levers (41, 43, 49; 61, 63, 69) completely towards one another.

11. The shears according to claim 10, **characterized in that** the spring tab (18) interacts with the releasing devices (46) of the other hand lever (41, 43, 49) for releasing the power cut latching devices during the complete closing of the shears.

12. The shears according to any one of claims 8 or 9, **characterized in that** releasing devices (46') are formed by a setting lever (22), which is attached to be hinged to the other hand lever (41, 43, 49), has a lift-out inclination (46') on its free end, and is adjustable to first and second positions by an actuating button (21),
wherein the lift-out inclination (46') of the setting lever (22) in its first position is opposite the spring tab (18), and the free end of the leaf spring (11) lifts off from the one hand lever during the complete closing of the shears, whereas in the second position of the setting lever (22), the lift-out inclination (46') does not get into contact with the spring tab (18) during the closing of the shears.

13. The shears according to one or more of the preceding claims, **characterized in that** the first hinge (2) has friction elements offering resistance to a free movement of the first hand lever (41, 43, 49) relative to the drive lever (51) of the second cutting element (52).

14. The shears according to claim 13, **characterized in that** the friction elements are formed by at least one disk spring, which is arranged on the hinge bolt forming the first hinge (2) and axially pretensions this second hinge.

15. The shears according to claim 9, **characterized in that** the first and the second hinges are joined to one another via a reinforcement tab (32), that the reinforcement tab has an integrated spring tab (33), which has a friction projection (34) on its side facing the first hand lever (41, 43, 49), which friction projection offers a resistance to a relative movement of the first hand lever (41, 43, 49) relative to the drive lever (51).

16. The shears according to any one of the preceding claims, **characterized in that** the coupler (71) carries an outward projecting nose on the edge remote from the cutter head, which nose is joined via the first spring element (10) to a nose arranged on the free end of the cutter lever (51).

## Revendications

1. Cisailles à main, en particulier cisailles à branches, à haies et/ou de jardinage, comportant deux éléments de coupe (42, 52) qui peuvent être pivotés par deux leviers à main (41, 43, 49 ; 61, 63, 69) autour d'une première articulation stationnaire (2) et forment une tête de coupe (1), présentant les éléments suivants :
le premier élément de coupe (42) est disposé à une extrémité d'un premier levier à main (41, 43, 49), tandis que le deuxième élément de coupe (52) comprend un levier d'entraînement (51) dépassant au-delà de la première articulation stationnaire (2),
une extrémité d'un deuxième levier à main (61, 63, 69) est reliée au premier levier à main (41, 43, 49) par une deuxième articulation stationnaire (3) décalée parallèlement à la première articulation (2),
un coupleur allongé (70) présente à ses extrémités des troisième et quatrième articulations (8, 9), dont la troisième articulation (8) est articulée à l'extrémité libre du levier d'entraînement (51) à une distance axiale de la première articulation (2) et forme avec celle-ci une première paire d'articulations (2, 8), et la quatrième articulation (9) est articulée sur le deuxième levier à main (61, 63, 69) à une distance axiale de la deuxième articulation (3) et forme avec celle-ci une deuxième paire d'articulations (3, 9),
les deux leviers à main (41, 43, 49 ; 61, 63, 69) et les deux éléments de coupe (42, 52) forment un système à quatre articulations formé par les goujons d'articulation des paires d'articulations (2, 8 ; 3, 9), la distance entre les articulations d'au moins une des paires d'articulations (2, 8 ; 3, 9) pouvant être modifiée par le fait que la quatrième articulation (9) disposée sur le deuxième levier à main (61, 63, 69) est guidée dans une glissière sous la forme d'un guidage à fente (62) dans ce levier de manière à pouvoir être déplacée axialement entre une première position pour une coupe normale et une deuxième position pour une coupe en force avec démultiplication accrue et peut être ramenée dans une position correspondante à la coupe normale par un premier élément de ressort (10), **caractérisées en ce qu'**il est prévu un dispositif d'enclenchement (12) pour coupe en force qui, après que les leviers à main (41, 43, 49 ; 61, 63, 69) ont été complètement écartés, maintient l'articulation coulissante (9) dans une position (65) correspondant à la coupe en force et n'est libéré que par un mouvement de rapprochement complet des leviers à main (41, 43, 49 ; 61, 63, 69) afin de permettre un mouvement de retour de l'articulation coulissante (9) jusque dans la position correspondant à la coupe normale par le premier élément de ressort (10).

2. Cisailles à main selon la revendication 1,
**caractérisées en ce qu'**un dispositif d'enclenchement élastique (13, 14) pour coupe normale maintient l'articulation coulissante (9) dans la position pour une coupe normale et peut être libéré par un mouvement des deux leviers à main (41, 43, 49 ; 61, 63, 69) en écartement l'un de l'autre après avoir surmonté la force d'enclenchement du dispositif d'enclenchement pour coupe normale (13, 14).

3. Cisailles à main selon la revendication 2,
**caractérisées en ce que** le guidage à fente (62) et/ou les guidages à fente présente(nt) au moins un premier évidement d'enclenchement (66) pour l'articulation coulissante (9) du coupleur (70), évidement qui est disposé dans le bord du guidage à fente (62), adjacent au bord extérieur du levier respectif, et à son extrémité éloignée de l'articulation stationnaire respective (2, 3) de la paire d'articulations (2, 8 ; 3, 9), et dans lequel l'articulation coulissante (9) peut être arrêtée par le premier dispositif d'enclenchement pour coupe normale après que les leviers à main (43, 45 ; 63, 65) se sont complètement rapprochés.

4. Cisailles à main selon l'une des revendications 1 à 3,
**caractérisées en ce que** le guidage à fente (62) et/ou les guidages à fente présente(nt) au moins un deuxième évidement d'enclenchement (65) pour l'articulation coulissante (9) du coupleur (70), évidement qui est disposé dans le bord du guidage à fente (62), adjacent au bord extérieur du levier respectif, et à son extrémité adjacente à l'articulation stationnaire respective (2, 3) de la paire d'articulations (2, 8 ; 3, 9), et dans lequel l'articulation coulissante (9) peut être arrêtée par le deuxième dispositif d'enclenchement pour coupe en force (12) après que les leviers à main (41, 43, 49 ; 61, 63, 69) se sont complètement écartés.

5. Cisailles à main selon l'une ou plusieurs des revendications 1 à 4,
**caractérisées en ce que** des dispositifs de déclenchement (46) sont prévus sur l'un des leviers à main (41, 43, 49 ; 61, 63, 65) pour libérer les dispositifs d'enclenchement pour coupe en force (12) lorsque les leviers à main (41, 43, 45 ; 61, 63, 69) se sont complètement rapprochés.

6. Cisailles à main selon l'une ou plusieurs des revendications précédentes,
**caractérisées en ce que** l'articulation coulissante (9) est formée par un goujon d'articulation ayant une tête (91), **en ce que** la tête (91) coopère avec un deuxième élément de ressort (11) qui comporte une partie coudée (14) destinée à recevoir une tête (91) du goujon d'articulation de l'articulation (9) qui peut coulisser dans le guidage à fente (62), et une surface de glissement inclinée (13), qui forment le dispositif d'enclenchement pour coupe normale qui, lorsqu'une force accrue est exercée lors de l'écartement des leviers à main (41, 43, 49 ; 61, 63, 69), permet un mouvement dudit goujon d'articulation hors de la position correspondant à la coupe normale en direction de la deuxième position, et **en ce que**
le deuxième élément de ressort (11) présente une portion d'extrémité (12) précontrainte à rencontre du second levier à main (61), qui forme le dispositif d'enclenchement pour coupe en force (12) et qui, une fois que la position pour une coupe en force est atteinte, maintient la tête (91) dans ladite position jusqu'à un rapprochement complet des leviers à main (41, 43, 49 ; 61, 63, 69).

7. Cisailles selon la revendication 6,
**caractérisées en ce que** le deuxième élément de ressort est formé par un ressort à lame (11) qui est fixé à l'extrémité d'un levier à main (61, 63, 69) ayant le guidage à fente (62) opposée aux éléments de coupe (42, 52), recouvre sensiblement le guidage à fente (62) et, à partir de son point de fixation, présente la partie coudée (14), destinée à recevoir la tête (91), et la surface de glissement inclinée (13), qui forment le dispositif d'enclenchement pour coupe normale, ainsi que la portion d'extrémité (12) qui forme le dispositif d'enclenchement pour coupe en force.

8. Cisailles selon la revendication 6,
**caractérisées en ce que** le deuxième élément de ressort (11) est un ressort façonné en matériau rond qui présente la partie coudée réalisée pour recevoir une surface latérale de la tête (91) du goujon de l'articulation (9) coulissant dans le guidage à fente (62) et s'étendant dans la direction longitudinale du guidage à fente, ainsi qu'une surface de glissement inclinée (13) en tant que dispositif d'enclenchement pour coupe normale et qui présente, dans son prolongement, en tant que portion d'extrémité, une partie coudée bloquant le guidage à fente, qui, à l'état enclenché, maintient l'articulation (9) dans la position pour coupe en force et forme le dispositif d'enclenchement pour coupe en force.

9. Cisailles selon l'une ou plusieurs des revendications 6 à 8,
**caractérisées en ce que** le deuxième élément de ressort (11) est fixé sur le côté arrière du levier à main (61, 63, 69) présentant le guidage à fente (62) sur son extrémité détournée des éléments de coupe (42, 52).

10. Cisailles selon l'une ou plusieurs des revendications 6 à 9,
**caractérisées en ce que** le deuxième élément à ressort (11) présente une languette à ressort (18) disposée au voisinage de la portion d'extrémité (12), languette qui libère le dispositif d'enclenchement pour coupe en force lorsque les leviers à main (41, 43, 49 ; 61, 63, 69) se rapprochent complètement.

11. Cisailles selon la revendication 10,
**caractérisées en ce que** la languette à ressort (18) coopère avec les dispositifs de déclenchement (46) de l'autre levier à main (41, 43, 49) pour libérer les dispositifs d'enclenchement pour coupe en force lorsque les cisailles sont complètement fermées.

12. Cisailles selon l'une des revendications 7 ou 8,
**caractérisées en ce que** les dispositifs de déclenchement (46') sont formés par un levier de réglage (22) qui est fixé en articulation à l'autre levier à main (41, 43, 49), présente un biseau de levage (46') à son extrémité libre et peut être réglé dans une première et dans une deuxième position par un bouton d'actionnement (21), et le biseau de levage (46') du levier de réglage (22), dans sa première position, est opposé à la languette à ressort (18) et l'extrémité libre du ressort à lame (11) se soulève d'un levier à main lorsque les cisailles sont complètement fermées, tandis que dans la deuxième position du levier de réglage (22), le biseau de levage (46') ne vient pas en contact avec la languette à ressort (18) lorsque les cisailles sont fermées.

13. Cisailles selon l'une ou plusieurs des revendications précédentes,
**caractérisées en ce que** la première articulation (2) présente des éléments de friction qui opposent une résistance à un libre mouvement du premier levier à main (41, 43, 49) par rapport au levier d'entraînement (51) du deuxième élément de coupe (52).

14. Cisailles selon la revendication 13,
**caractérisées en ce que** les éléments de friction sont formés par au moins un ressort à coupelle qui est disposé sur le goujon d'articulation formant la première articulation (2) et qui précontraint axialement cette deuxième articulation.

15. Cisailles selon la revendication 9,
**caractérisées en ce que** la première et la deuxième articulation sont reliées l'une à l'autre par une languette de renforcement (32), **en ce que** la languette de renforcement présente une languette à ressort intégrée (33) qui présente sur son côté tourné vers le premier levier à main (41, 43, 49) une bosse de friction (34) qui oppose une résistance à un mouvement relatif du premier levier à main (41, 43, 49) par rapport au levier d'entraînement (51).

16. Cisailles selon l'une des revendications précédentes,
**caractérisées en ce que** le coupleur (71) porte un talon qui fait saillie vers l'extérieur sur le bord éloigné de la tête de coupe et qui est relié à un talon, disposé à l'extrémité libre du levier de coupe (51), par le premier élément de ressort (10).
